# EUROPEAN PATENT SPECIFICATION

(11) **EP 0 908 043 B1**
(45) Date of publication and mention of the grant of the patent: **30.11.2005**
(21) Application number: 97932437.3
(22) Date of filing: 30.06.1997
(51) Int. Cl.: H04M 3/46, H04M 3/38, H04Q 7/22, H04M 3/42, H04Q 3/00

(54) **IMPROVEMENTS IN OR RELATING TO CALL HANDLING**
VERBESSERUNGEN BEI ODER BEZOGEN AUF ANRUFBEARBEITUNG
AMELIORATIONS CONCERNANT L'ACHEMINEMENT D'APPELS

(30) Priority: 28.06.1996 US 671679; 10.07.1996 US 677943; 09.08.1996 US 695377
(43) Date of publication of application: 14.04.1999
(73) Proprietor: HARRIS CORPORATION, Melbourne Florida 32919 (US)
(72) Inventor: JACKSON, Allen, Lee, Pengrove, CA 94951 (US); HOCHMAN, David, Charles, Nicasio, CA 94910 (US); SIKAND, Parminder, Singh, San Rafael, CA 94930 (US); PETERSEN, Charles, Louis, Fairfax, CA 94930 (US); TERHUNE, Daniel, Scott, Santa Rosa, CA 95404 (US); UKENO, Richard, San Francisco, CA 94131 (US)
(74) Representative: Meddle, Alan L.
(86) International application number: PCT/US1997/011509
(87) International publication number: WO 1998/000959

(56) References cited:
- WO-A-94/06236
- DE-A- 4 233 064
- US-A- 5 206 901
- US-A- 5 329 578
- US-A- 5 454 032
- PATENT ABSTRACTS OF JAPAN vol. 017, no. 380 (E-1399), 16 July 1993 & JP 05 063823 A (NEC CORP), 12 March 1993

## Description

The invention relates to methods of routing received telephone calls, and more particularly to a method of refusing a received call in which the called party is free to use its telephone while the telephone system continues to provide a ring signal to the calling party whose call was refused.

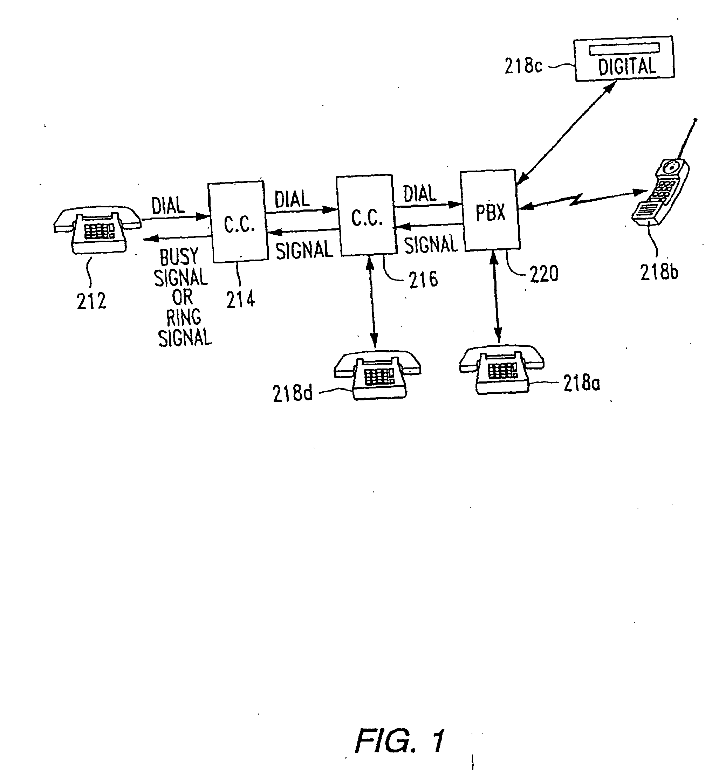

Figure 1 is a block diagram illustrating routing of calls in a conventional telephone system.

In the operation of a telephone system, such as depicted in Figure 1, a calling party's telephone 212 sends a dialing signal to its central office 214 which, in turn, sends a dialing signal to a central office 216 serving the called party's telephone 218. The called party's phone 218 may be conventionally connected to central office 216 as shown by phone 218d or may be connected through a private exchange 220 as shown by conventional phone 218a, wireless phone 218b and digital phone 218c. The dialing signal from central office 216 assures the appropriate connection to the called party's telephone. The two central offices and the private exchange (if present) may be considered a switching system connecting the two telephones.

If a connection from central office 216 (or private exchange 220) to the called party's telephone 218 is idle (that is, the telephone is on-hook), central office 216 (or private exchange 220) provides a data signal to central office 214 which, upon receipt of the data signal, provides a ring signal to the calling party's telephone 212 which indicates that the connection to the called party's telephone has been made and that the called party's telephone is available to be answered. Conversely, if the called party's, telephone is busy (off-hook), central office 214 provides a busy signal to calling party's telephone 212. Note that in some telephone systems the ring and busy signals are provided by another source such as central office 216 or private exchange 220, and the present invention is not limited to a particular origin of these signals within the switching system.

A telephone call to the called party may be answered by the called party, answered by an answering system (e.g., machine, voice-mail, message service), or left unanswered. If the call to the called party is not answered the connection between the calling and called party's telephones is maintained, the called party's telephone continues to ring, and the calling party's telephone continues to receive a ring signal until the calling party hangs up. If the called party wants to use its telephone when its telephone is ringing, the called party must wait until the connection is terminated by the calling party (otherwise, if the called party goes off-hook, the call from the calling party will be answered.

DE-A-4233064 discloses a method of refusing a call whilst remaining on hook in which a called party can choose to divert a received call to another telephone without going off hook simply by pressing a soft key upon which the telephone to which the call has been diverted continues to provide a ringing signal to the calling party.

A busy individual or business may have an immediate need for a free telephone connection and may not want to wait for an incoming call which is not to be answered to be terminated by the calling party. That is, if an incoming call is not to be answered, it is desirable to free the line immediately rather than waiting until the ringing stops.

Further, when a call is not to be answered it is often desirable to terminate the call without answering the call and without the calling party being aware that the called party terminated the call. A calling party would know that the called party answered and terminated the call if the called party placed its telephone off-hook momentarily and then on-hook.

Alternatively, it may be desirable to redirect the calling party to a no-answer treatment (e.g., forward to voice mail, forward to operator, forward to answering machine) and free the called party's telephone.

An object of the invention is to provide a novel method of operating a telephone system which frees a called party's telephone upon command so as to obviate the problems of the prior art.

Another object is to provide a method for allowing a called party to free its telephone for use while continuing to provide a ring signal to the calling party.

Yet another object is to provide a method in which, upon receipt of one or more rings at the called party's telephone, one or more key strokes are entered at the called party's telephone before going off-hook in order to provide a refusal signal to a switching system which is providing a ring signal to the calling party, the refusal signal indicating that the switching system is to continue to provide the ring signal to the calling party until the calling party terminates the call.

Still another object is to provide a method in which, upon receipt of one or more rings at the called party's telephone, one or more key strokes are entered at the called party's telephone before going off-hook in order to provide a refusal signal indicating that the incoming call is to be redirected for no-answer treatment immediately or at the end of a period of time.

In a preferred embodiment a called party receives a telephone call from a calling party which is not to be answered. By the entry of one or more key strokes on the called party's telephone while the telephone is ringing and on-hook, the called party's telephone sends a refusal signal to a switching system which is providing the ring signal to the calling party. The refusal signal causes the switching system to continue to process the incoming call while disassociating the called party's wireless telephone. The refusal signal may either indicate that the switching system is to continue to provide the ring signal to the calling party until the calling party terminates the call, or redirect the incoming call for no-answer treatment, whereby the called party's telephone is available for use before termination of the call by the calling party without the called party's telephone going off-hook.

In a further preferred embodiment, the called party's telephone is a wireless telephone in which one or more key strokes on the wireless telephone provides appropriate instructions while the wireless telephone is ringing and on-hook which cause transmission of a refusal signal. Once the refusal signal has been sent, the wireless telephone is available for use, and may be taken off-hook without being connected to the refused call.

The method may also be used with conventional telephones with or without a private exchange. A refusal signal from the called party's telephone while it is ringing and on-hook causes the telephone system to generate the appropriate data signal for sustaining the ringing signal at the calling party's telephone or processing the call for no-answer treatment. Once the refusal signal has been sent, the called party's telephone is available for use, and may be taken off-hook without being connected to the refused call.

The format of the refusal signal may be any conventional format appropriate for the telephone system in which the method is used. The refusal signal may be a sequence of several key strokes on the telephone keypad, and desirably is a single key stroke. When the refusal signal is from a wireless telephone to its associated private exchange, the refusal signal may be programmed into existing instructions the wireless telephone and its associated private exchange typically are a set) without need for additional hardware. Similarly, when the method is used with conventional telephones without the private exchange existing hardware may be used at the telephone and the central office, although some modifications may be needed to translate the refusal signal from the telephone into a data signal (such modifications being within the skill of ordinary artisans in telephony.) The disassociation of the called party's telephone responsive to the sending of a refusal signal may be accomplished using techniques available to those of skill in the art.

The specific behavior directed by the refusal signal (continue the ring signal and/or redirect for no-answer treatment) may be specified as part of the called party's telephone setup (thus selecting the behavior by default), or by means of separate refusal signals (e.g., different key stroke sequences) which the called party may enter upon receipt of a call.

If the incoming call is to be redirected for no-answer treatment rather than continuing the ring signal until the calling party hangs up, the calling party may be redirected immediately or after a predetermined number of rings or period of time, such as by use of a counter or timer available in the telephone system or provided with the present invention.

## Claims

1. A method of operating a telephone system in which a called party receives a telephone call from a calling party which is not to be answered, the method allowing the called party to free its telephone for use while continuing to provide a ring signal to the calling party, **characterised in that**, upon receipt of one or more rings at the called party's telephone, one or more key strokes are entered at the called party's telephone while it is on-hook to provide a refusal signal to a switching system connected to the calling party, the refusal signal indicating that the switching system is to continue to provide the ring signal to the calling party until the calling party terminates the call, whereby the called party's telephone is available for use before termination of the call by the calling party without the called party's telephone going off-hook.

2. A method as claimed in Claim 1, including the step wherein the refusal signal selectively indicates that the calling party is to be redirected to no-answer treatment, namely forward to voice mail, forward to operator, or forward to answering machine.

3. A method as claimed in Claim 2, including the step of selectively delaying the redirection to no-answer treatment for a period of time or a number of rings.

4. A method as claimed in any preceding claim, wherein a single key stroke entry at the called party's telephone provides the refusal signal.

5. A method as claimed in any preceding claim, wherein the switching system comprises a private exchange and the refusal signal causes the private exchange to generate a conventional data signal indicating that the called party's telephone is on-hook.

6. A method as claimed in any one of Claims 1 to 4, wherein the switching system comprises a central office and the refusal signal causes the central office to generate a conventional data signal indicating the called party's telephone is on-hook.

## Patentansprüche

1. Verfahren zum Betreiben eines Fernsprechsystems, in dem eine angerufene Partei einen Telefonanruf von einer anrufenden Partei empfängt, der nicht beantwortet werden soll, wobei das Verfahren ermöglicht, daß die anrufende Partei ihr Telefon zur Benutzung freigibt, während der anrufenden Partei weiterhin ein Klingelsignal angezeigt wird, **dadurch gekennzeichnet, daß** bei Empfang eines oder mehrer Klingeltöne bei dem Telefon der angerufenen Partei einer oder mehre Tastenanschläge in das Telefon der angerufenen Partei eingegeben werden, während das Telefon aufgelegt ist, um ein Ablehnungssignal an ein Schaltsystem, das mit der anrufenden Partei verbunden ist, auszugeben, wobei das Ablehnungssignal anzeigt, daß das Schaltsystem der anrufenden Partei weiter das Klingelsignal anzeigen soll, bis die anrufende Partei den Anruf beendet, wobei das Telefon der angerufenen Partei zur Benutzung zur Verfügung steht, bevor der Anruf durch die anrufende Partei beendet wird, ohne daß das Telefon der angerufenen Partei abgenommen wird.

2. Verfahren nach Anspruch 1, bei dem das Ablehnungssignal wahlweise anzeigt, daß die anrufende Partei an eine keine-Antwort-Verarbeitung weitergeleitet werden soll, nämlich an eine Voice Mail, an einen Operator oder an einen Anrufbeantworter.

3. Verfahren nach Anspruch 2, bei dem die Umleitung an die keine-Antwort-Verarbeitung für eine bestimmte Zeitspanne oder eine Anzahl von Klingeltönen verzögert wird.

4. Verfahren nach einem der vorangehenden Ansprüche, wobei die Eingabe eines einzelnen Tastenanschlags in das Telefon der angerufenen Partei das Ablehnungssignal vorsieht.

5. Verfahren nach einem der vorangehenden Ansprüche, wobei das Schaltsystem eine private Vermittlungseinheit umfaßt und das Ablehnungssignal bewirkt, daß die private Vermittlungseinheit ein herkömmliches Datensignal erzeugt, welches angibt, daß das Telefon der angerufenen Partei aufgelegt ist.

6. Verfahren nach einem der Ansprüche 1 bis 4, wobei das Vermittlungssystem ein zentrales Amt umfaßt und das Ablehnungssignal bewirkt, daß das zentrale Amt ein herkömmliches Datensignal erzeugt, daß angibt, daß das Telefon der angerufenen Partei aufgelegt ist.

## Revendications

1. Procédé d'activation d'un système téléphonique dans lequel un appelé reçoit un appel téléphonique d'un appelant auquel il n'y a pas de réponse, le procédé permettant à l'appelé de libérer son téléphone pour l'utiliser tout en envoyant un signal de sonnerie à l'appelant, **caractérisé en ce que** lors de la réception d'une ou plusieurs sonneries au téléphone de l'appelé, une ou plusieurs frappes de touche sont effectuées au téléphone de l'appelé lorsqu'il est raccroché pour envoyer un signal de refus à un système de commutation connecté à l'appelant, le signal de refus indiquant que le système de commutation doit continuer à envoyer le signal de sonnerie à l'appelant jusqu'à ce que l'appelant interrompe l'appel, moyennant quoi le téléphone de l'appelé est disponible avant le fin de l'appel par l'appelant sans que le téléphone de l'appelé ne soit décroché.

2. Procédé selon la revendication 1, comprenant l'étape dans laquelle le signal de refus indique sélectivement que l'appelant doit être détourné vers un traitement de non-réponse, à savoir transmission à une messagerie vocale, transmission vers un opérateur ou transmission vers un répondeur téléphonique.

3. Procédé selon la revendication 2, comprenant l'étape consistant à retarder sélectivement le détournement vers un traitement de non-réponse pour une période de temps ou un certain nombre de sonneries.

4. Procédé selon l'une quelconque des revendications précédentes, dans lequel une entrée à seule frappe de touche au téléphone de l'appelé envoie le signal de refus.

5. Procédé selon l'une quelconque des revendications précédentes, dans lequel le système de commutation comprend un central privé et le signal de refus entraîne la production par le central privé d'un signal de données conventionnelles indiquant que le téléphone de l'appelé est raccroché.

6. Procédé selon l'une quelconque des revendications 1 à 4, dans lequel le système de commutation comprend un central téléphonique et le signal de refus entraîne la production par le central téléphonique d'un signal de données conventionnelles indiquant que le téléphone de l'appelé est raccroché.
